# EUROPÄISCHE PATENTANMELDUNG

(11) **EP 1 314 899 A2**
(43) Veröffentlichungstag der Anmeldung: **28.05.2003**
(21) Anmeldenummer: 02025261.5
(22) Anmeldetag: 13.11.2002
(51) Int. Cl.: F16C 13/00

(54) **Dichtungsanordnung für eine Walze**

(30) Priorität: 27.11.2001 DE 10158034
(71) Anmelder: Voith Paper Patent GmbH, 89522 Heidenheim (DE)
(72) Erfinder: Baumeister, Thomas, 47918 Tönisvorst (DE)
(74) Vertreter: Knoblauch, Andreas, Dr.-Ing.

(57) **Zusammenfassung**

Es wird eine Dichtungsanordnung (14) für eine Walze (2) angegeben, welche einen Walzenmantel (4) umfaßt, der drehbar auf einer Walzenachse (10) gelagert ist, wobei zur Abdichtung zwischen der Walzenachse (10) und dem Walzenmantel (4) mindestens eine Dichtung (18) vorgesehen ist, die eine Dichtlippe (40) und einen Dichtring (38) umfaßt.

Man möchte auf einfache Weise eine möglichst gute Kühlung der Dichtung erlauben und die Dichtung einfach nachrüsten können.

Hierzu ist vorgesehen, daß der Dichtring (38) mit einer Anzahl von Bohrungen (48) versehen ist, die auf die Dichtlippe (40) hin gerichtet sind und eingangsseitig mit einem durch das feststehende Bauteil nach außen führenden Versorgungskanal (20) verbunden sind.

## Beschreibung

Die Erfindung betrifft eine Dichtungsanordnung für eine Walze, welche einen Walzenmantel umfaßt, der drehbar auf einer Walzenachse gelagert ist, wobei zur Abdichtung zwischen der Walzenachse und dem Walzenmantel mindestens eine Dichtung vorgesehen ist, die eine Dichtlippe und einen Dichtring umfaßt.

Derartige Biegeeinstellwalzen, die auch als Durchbiegungsausgleichswalzen bezeichnet werden, werden in der Regel als Ober- und/oder Unterwalze in einem Walzenstapel eines Kalanders eingesetzt, mit dem eine Papierbahn oder eine vergleichbare Materialbahn mit erhöhtem Druck beaufschlagt wird. Der Walzenmantel ist dabei in Pressrichtung des Walzenstapels von hydrostatischen Stützelementen unterstützt, denen fortlaufend Druckflüssigkeit zugeführt wird.

Zur Drehlagerung der Walze sind üblicherweise an den Walzenenden zwischen dem Walzenmantel und der Walzenachse Lager, in der Regel Wälzlager vorgesehen. Die Wälzlager sind im Betrieb laufend flüssigkeitsgeschmiert, d. h. ihnen wird Schmieröl zugeführt. Um zu verhindern, daß Öl von den hydrostatischen Stützelementen im axialen Inneren des Walzenmantels und gegebenenfalls auch die Schmierflüssigkeit der Wälzlager nach außen abfließen kann, sind Dichtungsanordnungen vorgesehen, die den vom Walzenmantel umschlossenen Hohlraum nach außen abdichten. Dabei weist die Dichtung üblicherweise einen Dichtring mit einer radial nach außen oder innen vorstehenden Dichtlippe auf, die an einer Gegenfläche anliegt. Im Betrieb ergibt sich dann eine Relativbewegung zwischen der Dichtlippe und der Gegenfläche.

Da die Dichtungsanordnungen bewegliche Teile gegeneinander abdichten müssen, entsteht unter Umständen eine erhebliche Reibungswärme, die mit Hilfe einer Kühlflüssigkeit oder einem Fluid, in der Regel ebenfalls ein Öl, abgeführt werden muß.

Der Erfindung liegt daher die Aufgabe zugrunde, eine Dichtungsanordnung anzugeben, welche eine möglichst gute Schmierung und Kühlung der Dichtung erlaubt und welche besonders einfach ausgebildet sowie für Nachrüstungen geeignet ist.

Die Aufgabe wird bei einer Dichtungsanordnung der eingangs genannten Art erfindungsgemäß dadurch gelöst, daß der Dichtring mit einer Anzahl von Bohrungen versehen ist, die auf die Dichtlippe hin gerichtet sind und eingangsseitig mit einem durch das feststehende Bauteil nach außen führenden Versorgungskanal verbunden sind.

Die Bohrungen wirken als Düsen, durch die Öl auf die Dichtlippe gespritzt werden kann. Allerdings sind hierzu keine externen Bauelemente erforderlich. Die Düsen sind in den Dichtring integriert. Hierdurch ist eine weitgehend gute und einfache Schmierung und unmittelbare Kühlung durch direkte Zuführung des Fluids auf die Dichtlippe sichergestellt. Eine derartige Dichtung läßt sich auch in bestehende Walzen einfach nachrüsten. Erforderlich ist es lediglich, die Zufuhr von Öl über den Versorgungskanal sicherzustellen. Die direkte Zuführung des Fluids auf die Dichtlippe führt zudem zu einer Verwirbelung des die Dichtlippe umgebenden Fluids, wodurch die Temperatur des Fluids vergleichmäßigt wird und somit eine gleichmäßige Kühlung erzielt wird. Aufgrund der gleichmäßigen und guten Kühlung sind keine speziellen Dichtlippenwerkstoffe oder spezielle Kühlflüssigkeit erforderlich. Die Dichtungsanordnung ist zudem konstruktiv besonders einfach ausgeführt und ist insbesondere auch für eine Verwendung standardisierter Bauteile geeignet. Auch ist über den Versorgungskanal eine Umkehrung des Fluidstroms ermöglicht, d. h. der nach außen führende Versorgungskanal kann sowohl zur Zu- als auch zur Abführung des Fluids genutzt werden.

Wenn die Bohrungen mit einem gemeinsamen Verteiler verbunden sind, ist eine besonders einfache Zufuhr von Kühlflüssigkeit zur Dichtlippe möglich.

Zweckmäßigerweise sind die Bohrungen im Dichtring radial angeordnet und münden in einen Innenraum zwischen der Dichtlippe und dem Dichtring. Dies ermöglicht eine direkte und besonders gleichmäßige Zuführung des Fluids in den Innenraum. Dabei gelangt das Fluid unmittelbar an die Dichtlippe, welche den höchsten Kühlbedarf aufweist. Die Bohrungen weisen vorteilhafterweise einen möglichst kleinen Durchmesser auf. Hierdurch gelangt das Fluid oder Kühlmittel gerichtet in den Innenraum. Der Innenraum ist insbesondere ein Ringraum. Insgesamt wird durch eine Verwirbelung des radial in den Ringraum geführten Fluids eine besonders gleichmäßige Schmierung und Kühlung der Dichtung ermöglicht. Alternativ können die Bohrungen aber auch geneigt zur Walzenachse im Dichtring angeordnet sein.

Vorteilhafterweise ist der Verteiler als ein dem Dichtring zugeordneter, umlaufender Ringraum ausgebildet. Ein derartiger, umlaufender Ringraum ist auf besonders einfache Weise durch Anbringen oder Einstechen einer umlaufenden Nut herstellbar.

Um jedoch die Dichtungsanordnung auch auf einfache Weise für eine Nachrüstung bereits bestehender Walzanlagen nutzbar zu machen, ist der Verteiler zweckmäßigerweise durch eine Ausnehmung des Dichtrings gebildet und vorzugsweise im Dichtring integriert. Ein derartiger Verteiler wird auch als interner Verteiler bezeichnet und kann auch in bestehenden Walzen durch einfachen Austausch des Dichtrings nachgerüstet werden. Sowohl der externe Verteiler als auch der interne Verteiler ermöglichen eine weitgehend gleichmäßige Verteilung des Fluids auf die umlaufenden Bohrungen der Düse, durch die dann das Fluid unmittelbar auf die Dichtlippe geführt wird.

Auch ist von Vorteil, wenn der Dichtring in einem Stützring aufgenommen ist, der zumindest im Bereich der Bohrungen den Dichtring mit einer Einstülpung durchsetzt, wobei die Bohrungen im Stützring ausgebildet sind. Damit bildet der Stützring die Düsen, durch die die Flüssigkeit auf die Dichtlippe gespritzt wird. Der Stützring kann mechanisch stabiler als der Dichtring ausgebildet sein, so daß die Düsen nicht so schnell verschleißen.

Bevorzugt ist auch, daß der Dichtring eine angefaste Kante aufweist, die den Verteiler begrenzt. Dies ist eine besonders einfache Form, den Verteiler bereitzustellen. Der Dichtring wird nur geringfügig geschwächt.

Vorzugsweise ist das umlaufende Volumen des Verteilers größer als das wirksame Volumen der Bohrungen. Hierdurch ist eine Kompressionseinheit bei der Beaufschlagung mit Fluid erreicht. Dieser ermöglicht, daß das Fluid unter Druck auf die Düse befördert wird. Die Bohrungen weisen gleiche und besonders kleine Durchmesser von etwa 1 bis 2 mm auf, so daß das Fluid sprühartig in den Innenraum, d. h. unmittelbar auf die Dichtlippe, geführt wird.

Zweckmäßigerweise ist der Versorgungskanal durch einen Walzendeckel geführt und zur Ab- oder Zuführung des Fluids, insbesondere des Kühlmittels, vorgesehen. In der Regel wird der Versorgungskanal dabei zur Zuführung des Kühlmittels verwendet, kann jedoch bedarfsweise auch zur Abführung des Fluids durch entsprechende Pumprichtung eingesetzt werden.

Die Dichtungsanordnung eignet sich insbesondere zur Verwendung in einer Biegeeinstellwalze. Je nach Walzentyp kann die Dichtungsanordnung neben der oben beschriebenen Anordnung des mit der Walzenachse verbundenen Dichtrings mit einer radial nach innen oder nach außen ragenden Dichtlippe auch eine Anordnung eines mit dem Walzenmantel verbundenen Dichtrings mit einer radial nach innen oder nach außen ragenden Dichtlippe aufweisen.

Je nach Art und Aufbau der Dichtungsanordnung kann diese zur Vorspannung der Dichtlippe gegen eine abzudichtende Fläche ein Spannmittel umfassen. Dieses Spannmittel bewirkt ein sicheres Abdichten und kann beispielsweise ein Federelement sein. Alternativ ist auch ein hydraulisches Spannmittel möglich, bei dem ein Druck auf die Innenseite der Dichtlippe aufgebaut wird, der die Dichtlippe nach außen gegen die abzudichtende Fläche drückt.

Die mit der Erfindung erzielten Vorteile bestehen insbesondere darin, daß mittels einer in den Dichtring integrierten Düse eine direkte und möglichst gleichmäßige Schmierung und Kühlung der Dichtlippe ermöglicht ist. Durch eine derartige direkte Kühlung der Dichtung ist bei nur begrenztem Bedarf an Kühlmittel eine sichere Kühlung und Schmierung gewährleistet, ohne daß eine aufwendige Rückkühlung des Kühlmittels erforderlich wäre. Die Dichtungsanordnung ist besonders einfach ausgeführt. Insbesondere kann die Dichtungsanordnung auch auf Basis bisheriger Dichtungen durch einfache Konstruktionen, z. B. Einstechen von umlaufenden Nuten, ausgeführt sein und ist somit auch für eine Nachrüstung in bestehenden Walzen besonders geeignet.

Ausführungsbeispiele der Erfindung werden anhand einer Zeichnung näher erläutert. Darin zeigen:
- Fig. 1: schematisch im Längsschnitt eine Walze mit einer Dichtungsanordnung für ein Wälzlager,
- Fig. 2 bis 5: schematisch im vergrößerten Ausschnitt A verschiedene Ausgestaltungen der Dichtungsanordnung nach Fig. 1, und
- Fig. 6: schematisch im Ausschnitt eine Dichtungsanordnung für eine Außendichtung.

Gleiche Teile sind in allen Figuren mit den selben Bezugszeichen versehen.

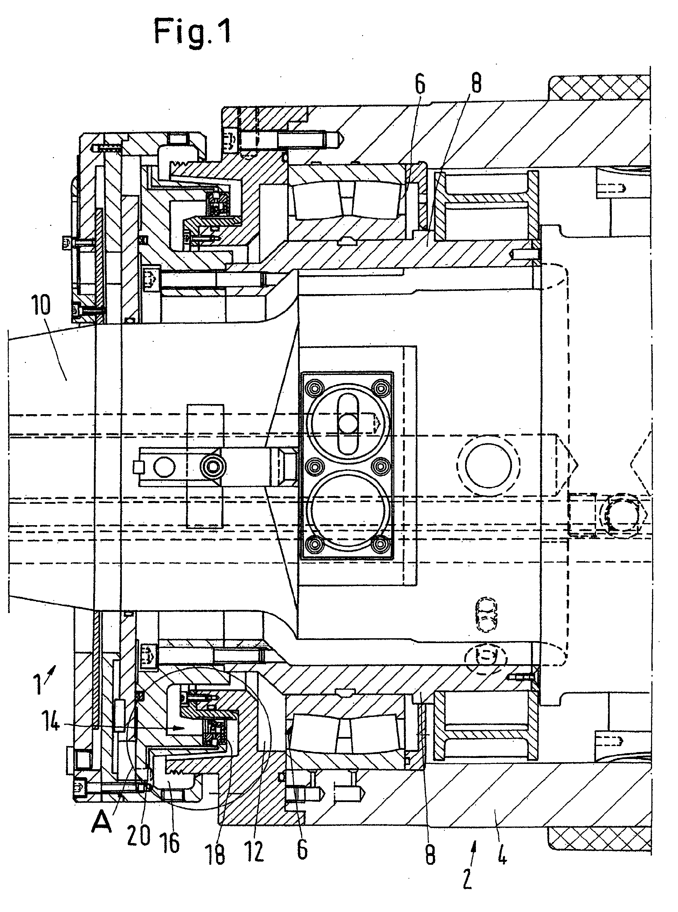

Die Fig. 1 zeigt ein Walzenende 1 einer Walze 2, z. B. einer Biegungseinstellwalze. Die Walze 2 weist einen Walzenmantel 4 auf, der über ein Wälzlager 6 auf einer Buchse 8 oder einem Führungselement gelagert ist, das an einer drehfest gelagerten Walzenachse 10 verschiebbar angeordnet ist. Der Walzenmantel 4 kann daher einen Hub, den sogenannten Mantelhub, ausführen. Zur Erzielung einer gewünschten Durchbiegung sind über die Länge des Walzenmantels 4 nicht näher darstellte hydrostatische Stützelemente oder andere Durchbiegungseinstellelemente vorgesehen, die den Walzenmantel 4 belasten und ihm die gewünschte Durchbiegung geben.

Im Innenraum 12 des Walzenmantels 4 und in den nach außen anschließenden Räumen befindet sich eine Hydraulikflüssigkeit, insbesondere Öl, das unter einem gewissen Druck, in der Regel nur wenig über dem atmosphärischen Druck, steht. Eine Dichtungsanordnung 14 sorgt dafür, daß keine Hydraulikflüssigkeit aus dem Innenraum 12 zur Atmosphäre 16 hin austritt. Die Dichtungsanordnung 14 umfaßt dabei eine dem jeweiligen Wälzlager 6 zugehörige, um die Walzenachse 10 umlaufende Dichtung 18, welche aufgrund von erheblicher Reibungswärme durch Abdichtung von gegeneinander bewegliche Teilen - Walzenmantel 4 und Walzenachse 10 - mit einem Fluid, in der Regel mit einem Öl, gekühlt werden muß.

Zur Zuführung des Fluids weist die Dichtung 18 einen nach außen führenden Versorgungskanal 20, z. B. eine Bohrung, auf. In den hier beschriebenen Ausführungsbeispielen ist die Walze 2 mit einer feststehenden Walzenachse 10 und einem drehbaren Walzenmantel 4 ausgeführt.

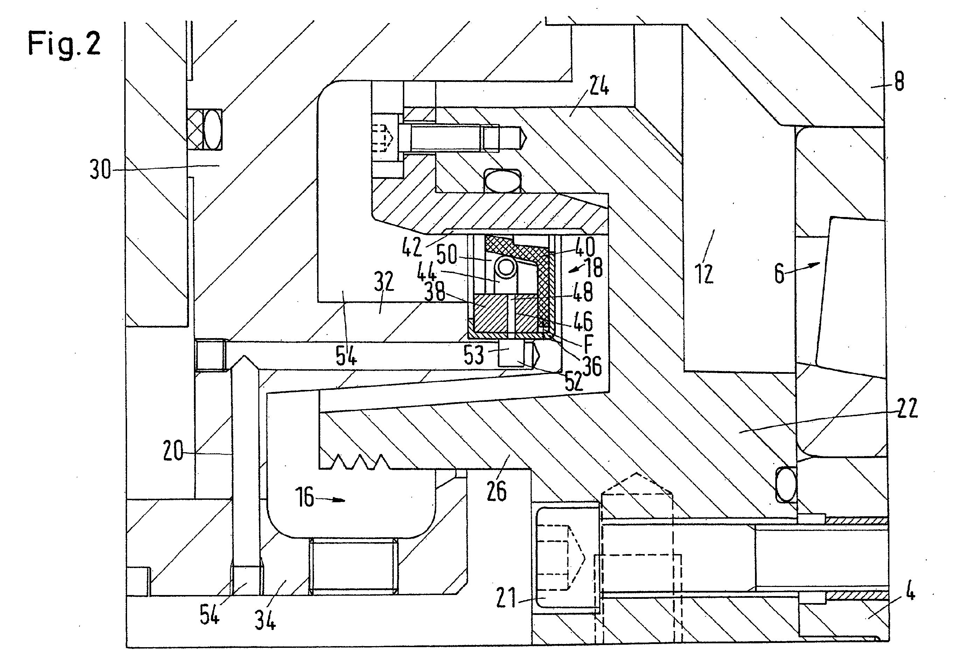

Der Aufbau der Dichtungen 18 wird nachstehend in Verbindung mit den Figuren 2 bis 5 näher erläutert. Diese zeigen jeweils die Dichtung 18 der Walze 2 nach Fig. 1 im vergrößerten Ausschnitt. Zur Abdichtung des Innenraums 12 zur Atmosphäre 16 ist am Walzenmantel 4 mittels Schrauben 21 eine Abdeckung 22 befestigt, die einen inneren Zylinderring 24 und einen äußeren Zylinderring 26 aufweist. Mit Hilfe von nicht dargestellten Schrauben ist an der Walzenachse 10 oder am Träger ein Flansch 30 befestigt, der einen inneren Zylinderring 32 und einen äußeren Zylinderring 34 aufweist. Je nach Art und Aufbau der Walze 2 kann der Flansch 30 auch an einem mit der Walzenachse 10 verbundenen und feststehenden Bauteil befestigt sein.

Am inneren Zylinderring 32 des Flansches 30 ist ein Stützring 36 für die Dichtung 18 befestigt. Auf dem Stützring 36 ist ein Dichtring 38 angeordnet, welcher axial seitlich mit einer Dichtlippe 40 verbunden ist. Dabei ist die Dichtlippe 40 mittels des Stützrings 36, welcher beispielsweise'eine L- oder U-Form aufweist, zwischen dem Dichtring 38 und einem Schenkel des Stützrings 36 formschlüssig befestigt. Somit umschließt der Stützring 36 in Form eines Deckels oder Ringes zumindest teilweise den Dichtring 38 mit der seitlich angeordneten Dichtlippe 40, wodurch eine Versteifung gegeben ist.

Die Dichtlippe 40 liegt an einer zylindrischen Dichtfläche 42 des inneren Zylinderrings 24 des Walzenmantels 4 an. Je nach Art und Aufbau der Dichtung 18 kann die Dichtlippe 40 einstückig mit dem Dichtring 38 und dem Stützring 36 ausgebildet sein. Dabei ist die Dichtung 18 beispielsweise aus einem Kunststoff gefertigt.

Die Dichtlippe 40 wird durch Flüssigkeitsdruck gegen die Dichtfläche 42 gedrückt. Zusätzlich kann ein Spannmittel 44, z. B. ein Federelement, zur Vorspannung der Dichtlippe 40 gegen die abzudichtende Fläche 42 vorgesehen sein. Dieses Spannmittel 44 bewirkt ein besonders sicheres Abdichten auch für den Fall, daß kühlmittelseitig der Auslegungsdruck unterschritten wird. Anstelle eines Federelements ist auch ein hydraulisches Spannmittel 44 möglich. Im Falle einer Verschiebung der Buchse 8, insbesondere einer Radialverschiebung, und somit einer Verschiebung der Dichtfläche 42 in Richtung der Dichtlippe 40, wird die zwischen dem Dichtring 38 und dem Stützring 36 angeordnete Dichtlippe 40 im Bereich eines Spiels oder Freiraums F entsprechend verschoben.

Zur Beaufschlagung der Dichtung 18, insbesondere der Dichtlippe 40, mit dem Fluid oder Kühlmittel ist im Dichtring 38 eine Anzahl von im Dichtring 38 angeordneten Bohrungen 48 integriert. Die Bohrungen 48 verlaufen radial und münden in einen zwischen der Dichtlippe 40 und dem Dichtring 38 gebildeten Innenraum 50 oder Ringraum, wobei sie auf die Dichtlippe 40 hin ausgerichtet sind. Flüssigkeit, die durch die Bohrungen 48 zugeführt wird, wird in Form eines Strahls auf die Dichtlippe 40 auftreffen. Der Stützring 36 weist entsprechende Bohrungen auf.

Zur Verteilung des Fluids oder des Schmiermittels auf die Bohrungen 48 ist ein Verteiler 52 vorgesehen. Der Verteiler 52 ist seinerseits eingangsseitig mittels einer Bohrung 54 mit dem durch den Flansch 30 nach außen führenden Versorgungskanal 20 verbunden. Der Verteiler 52 ist durch einen umlaufenden Ringraum oder Ringkörper im Flansch 30 gebildet. Die Bohrungen 48 münden in den Verteiler 52, der als Nut im Flansch 30 erzeugt werden kann. Der Verteiler 52 hat ein größeres Volumen als die Bohrungen 48. Wenn Flüssigkeit unter Druck zugeführt wird, dann verteilt sie sich in Umfangsrichtung gleichmäßig und wird über die Bohrungen 48 der Dichtlippe 40 zugeführt.

Für die konstruktive Ausgestaltung des den Verteiler 52 bildenden Ringraums sind einige besonders günstige Alternativen möglich, von denen jeweils eine in den Fig. 2 bis 5 gezeigt ist.

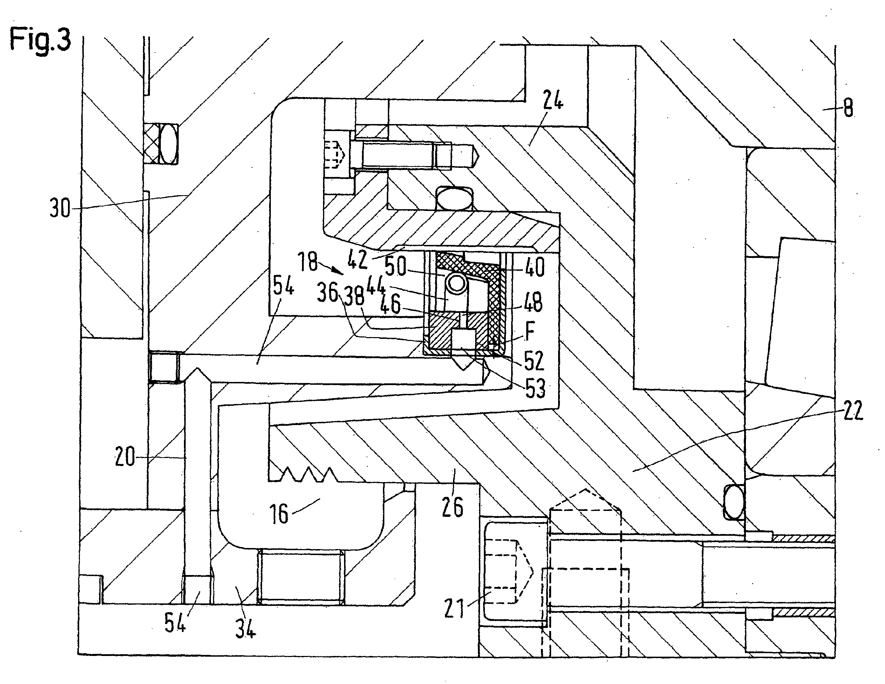

Die in der Fig. 2 dargestellte Dichtung 18 stellt in den Dichtring 38 integrierte Bohrungen 48 mit einem außerhalb der Dichtung 18, insbesondere außerhalb des Dichtrings 38 und somit im Material der eigentlichen Walzenachse angeordneten und demzufolge externen Verteiler 52 dar. Im weiteren wird in den Figuren 3 bis 5 jeweils eine Ausführungsform der Dichtung 18 mit internen Bohrungen 48 und einem internen Verteiler 52, d. h. einem in die Dichtung 18, z. B. in den Dichtring 38, integrierten Verteiler 52, beschrieben.

Fig. 3 zeigt die Dichtung 18 mit dem in den Dichtring 38 integrierten Verteiler 52. Dabei ist der Verteiler 52 durch eine einen umlaufende Ringkanal bildende Nut in dem Dichtring 38 gebildet. Der Stützring 36 kann eine entsprechende umlaufende Öffnung aufweisen. Es reicht in der Regel aber aus, wenn der Stützring 36 eine Bohrung im Bereich der Mündung des Versorgungskanals 20 aufweist. Bevorzugt ist das Volumen des Verteilers 52 größer als das wirksame Volumen der Bohrung 48. Insbesondere ist der Querschnitt der umlaufenden Nut größer als der Querschnitt der Bohrungen 48. Der Durchmesser der Bohrungen 48 beträgt ca. 1 bis 2 mm. Ein derartig kleiner Durchmesser bewirkt einen sprühartige Beaufschlagung der Dichtlippe 40 mit dem Fluid. Die Normweite der umlaufenden Nut beträgt ca. 4 bis 6 mm.

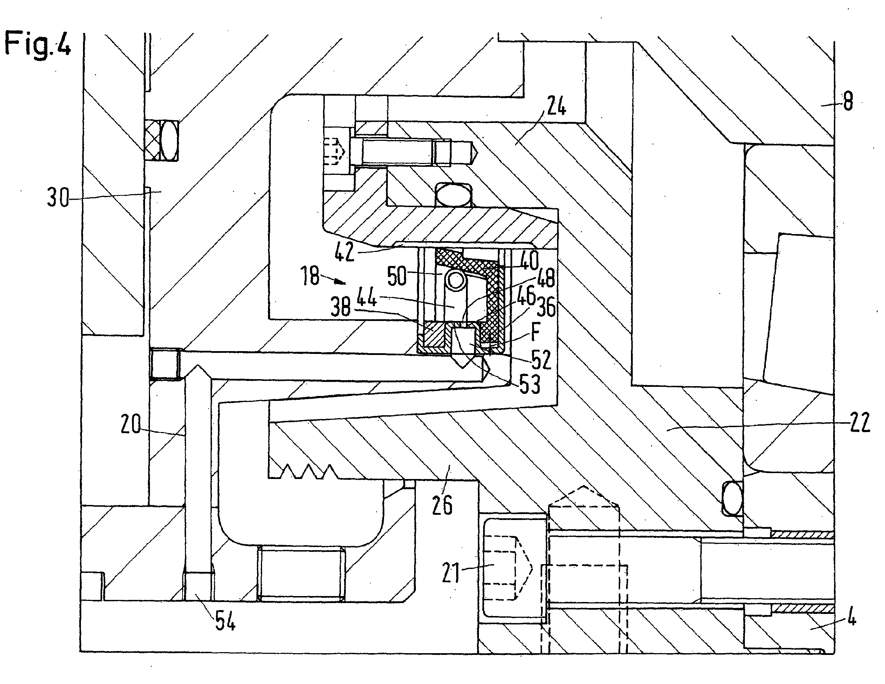

Fig. 4 zeigt eine weitere Ausführungsform der Dichtung 18 mit internen Bohrungen 48 und einem internen Verteiler 52. Dabei ist der Verteiler 52 durch ein entsprechend geformtes Profil 53, insbesondere durch eine U-Form, des Stützrings 36, welcher in den Dichtring 38 eingesetzt ist, gebildet. Die U-Form des Stützrings 36, die als Verteiler 52 dient, wirkt wie ein Trichter zum Zuführen des Kühlfluids in die radial im Stützring 36 angeordneten Bohrungen 48. Die Bohrungen 48 sind hier im Stützring 36 angeordnet. Da das Material des Stützrings 36 in der Regel stabiler ist als das in der Regel aus Kunststoff bestehende Material des Dichtrings 38, lassen sich zum einen die Bohrungen 48 genauer ausführen. Zum anderen wird der Verschleiß kleingehalten. Der Stützring 36 durchsetzt den Dichtring 38, so daß er eine Begrenzung des Innenraumes 50 bildet.

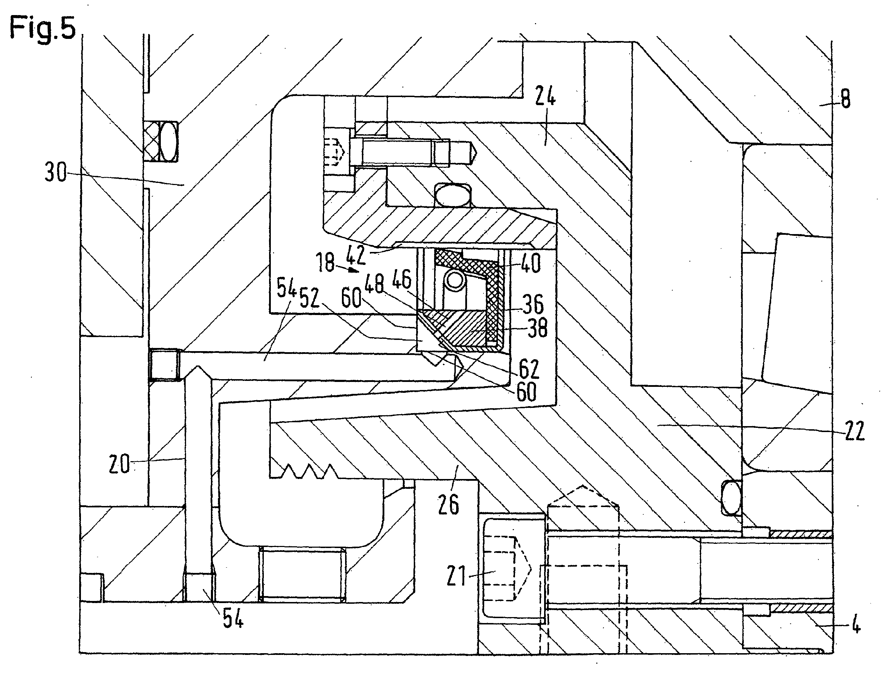

Fig. 5 zeigt eine weitere Ausführungsform der Dichtung 18 mit internen Bohrungen 48 und einem internen Verteiler 52. Dabei ist der Verteiler 52 durch einen Ringkanal gebildet, der einerseits durch im Flansch 30 ohnehin vorgesehene Stirnflächen 60 und andererseits durch eine abgeschrägte Seitenfläche 62 der Dichtringe 38 begrenzt ist. in diesem Fall sind die Bohrungen 48 radial um den Umfang des Dichtrings 38 verteilt und für eine besonders günstige Fluidführung seitlich oder schräg durch den Dichtring 38 geführt.

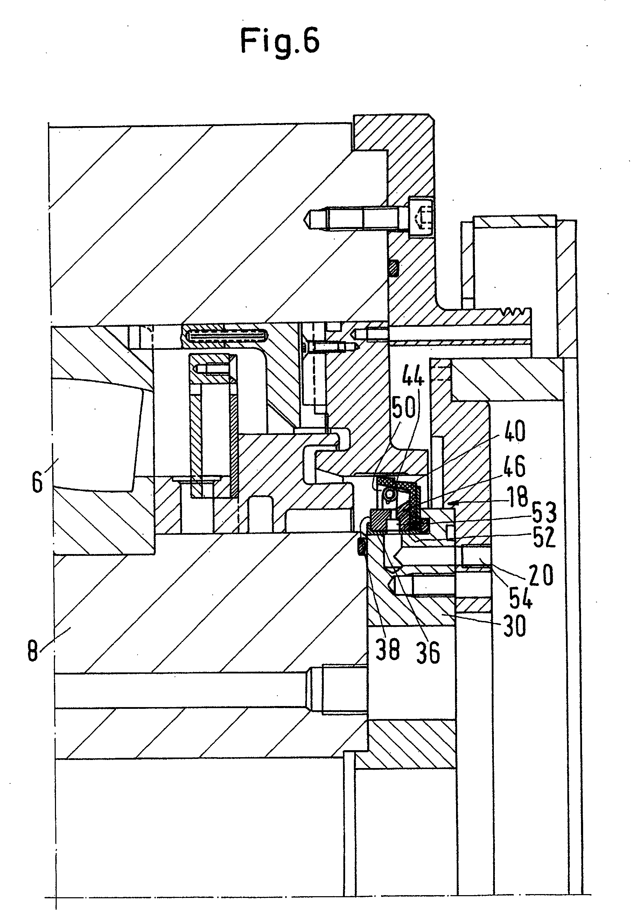

Die in den Figuren 1 bis 5 dargestellten Dichtungsanordnungen sind sogenannte Innendichtungen. Fig. 6 zeigt die Dichtung 18 gemäß Fig. 3 als Außendichtung. Es kann aber auch eine der anderen Ausführungsformen der Dichtung 18 nach den Figuren 2, 4 oder 5 als Außendichtung verwendet werden. Bei der Außendichtung 18 nach Fig. 6 ist der Stützring 36 mit dem Dichtring 38 mittels des Flansches 30 auf der Walzenachse 10 befestigt. Der Versorgungskanal 20 für den Verteiler 52 ist mittels Bohrungen 54 durch den Flansch 30 nach außen geführt. Im übrigen ist die Wirkungsweise dieser Dichtungsanordnung mit der der Figuren 2 bis 5 vergleichbar.

## Patentansprüche

1. Dichtungsanordnung (14) für eine Walze (2), welche einen Walzenmantel (4) umfaßt, der drehbar auf einer Walzenachse (10) gelagert ist, wobei zur Abdichtung zwischen der Walzenachse (10) und dem Walzenmantel (4) mindestens eine Dichtung (18) vorgesehen ist, die eine Dichtlippe (40) und einen Dichtring (38) umfaßt, **dadurch gekennzeichnet, daß** der Dichtring (38) mit einer Anzahl von Bohrungen (48) versehen ist, die auf die Dichtlippe (40) hin gerichtet sind und eingangsseitig mit einem durch das feststehende Bauteil nach außen führenden Versorgungskanal (20) verbunden sind.

2. Dichtungsanordnung nach Anspruch 1, **dadurch gekennzeichnet, daß** die Bohrungen (48) mit einem gemeinsamen Verteiler (52) verbunden sind.

3. Dichtungsanordnung nach Anspruch 1 oder 2, **dadurch gekennzeichnet, daß** die Bohrungen (48) im Dichtring (38) radial angeordnet sind und in einen Innenraum (50) zwischen der Dichtlippe (40) und dem Dichtring (38) münden.

4. Dichtungsanordnung nach Anspruch 2 oder 3, **dadurch gekennzeichnet, daß** der Verteiler (52) als ein dem Dichtring (38) zugeordneter, umlaufender Ringraum ausgebildet ist.

5. Dichtungsanordnung nach einem der Ansprüche 1 bis 4, **dadurch gekennzeichnet, daß** der Verteiler (52) durch eine Ausnehmung des Dichtrings (38) gebildet ist.

6. Dichtungsanordnung nach Anspruch 5, **dadurch gekennzeichnet, daß** der Verteiler (52) in den Dichtring (38) integriert ist.

7. Dichtungsanordnung nach einem der Ansprüche 1 bis 4, **dadurch gekennzeichnet, daß** der Verteiler (52) durch eine den Dichtungsring (38) gebende Nut gebildet ist.

8. Dichtungsanordnung nach einem der Ansprüche 1 bis 7, **dadurch gekennzeichnet, daß** der Dichtring (38) in einem Stützring (36) aufgenommen ist, der zumindest im Bereich der Bohrungen (48) den Dichtring mit einer Einstülpung durchsetzt, wobei die Bohrungen (48) im Stützring (36) ausgebildet sind.

9. Dichtungsanordnung nach einem der Ansprüche 1 bis 7, **dadurch gekennzeichnet, daß** der Dichtring (38) eine angefaste Kante aufweist, die den Verteiler (52) begrenzt.

10. Dichtungsanordnung nach einem der Ansprüche 1 bis 9, **dadurch gekennzeichnet, daß** das Volumen des Verteilers (52) größer ist als das wirksame Volumen der Bohrungen (48).

11. Dichtungsanordnung nach einem der Ansprüche 1 bis 10, **dadurch gekennzeichnet, daß** der Versorgungskanal (20) durch einen Walzendeckel geführt ist.

12. Biegeeinstellwalze mit einer Dichtungsanordnung nach einem der Ansprüche 1 bis 11.
